# EUROPÄISCHE PATENTSCHRIFT

(11) **EP 3 820 663 B1**
(45) Veröffentlichungstag und Bekanntmachung des Hinweises auf die Patenterteilung: **07.12.2022**
(21) Anmeldenummer: 19739276.4
(22) Anmeldetag: 10.07.2019
(51) Int. Cl.: B29C 43/22, B29C 43/28, B29C 43/26, B29C 48/00, B29C 43/46, B29C 48/08, B29C 48/12, B29C 48/156

(54) **VERFAHREN ZUR FERTIGUNG EINER KUNSTSTOFFDRÄNBAHN UND KUNSTSTOFFDRÄNBAHN**
METHOD FOR PRODUCING A PLASTIC DRAINAGE SHEET AND PLASTIC DRAINAGE SHEET
PROCÉDÉ DE FABRICATION D'UNE BANDE DE DRAINAGE PLASTIQUE ET BANDE DE DRAINAGE PLASTIQUE

(30) Priorität: 12.07.2018 DE 102018211667
(43) Veröffentlichungstag der Anmeldung: 19.05.2021
(73) Patentinhaber: SKZ - Testing GmbH, 97076 Würzburg (DE)
(72) Erfinder: ZANZINGER, Helmut, 74599 Wallhausen (DE)
(74) Vertreter: Rau, Schneck & Hübner Patentanwälte Rechtsanwälte PartGmbB
(86) Internationale Anmeldenummer: PCT/EP2019/068608
(87) Internationale Veröffentlichungsnummer: WO 2020/011882

(56) Entgegenhaltungen:
- CN-U- 203 077 622
- FR-A1- 2 661 435
- JP-A- 2014 211 025
- US-A- 5 190 404
- US-A1- 2008 121 121

## Beschreibung

Die Erfindung betrifft ein Verfahren zur Fertigung einer Kunststoffdränbahn. Zudem betrifft die Erfindung eine Kunststoffdränbahn.

Kunststoffdränbahnen können auch als Geosynthetic Drainage Sheet (GDS) bezeichnet werden. Sie finden Verwendung im Bergbau, Deponiebau, Tunnelbau, Straßenbau oder weiteren geotechnischen Anwendungen. Mittels der Kunststoffdränbahnen soll hierbei ein ausreichend hohes Wasserableitvermögen gewährleistet werden. Als Kunststoffdränbahnen werden für gewöhnlich Geonetze (GNT) verwendet, insbesondere bei sehr hohen Druckbelastungen. Geonetze werden in speziell hierfür konzipierten Anlagen hergestellt. Aus der US 2009/0041544 A1, der US 2008/0121121 A1 und US 5,190,404 A sind Geonetze und Verfahren zu deren Herstellung bekannt.

Aus der DE 24 00 941 C2 ist ein Verfahren zur Herstellung von Kunststoffnetzen bekannt. Nach Einbringen von Rillen in beide Oberflächen einer Kunststofffolie wird die Kunststofffolie um ein Vielfaches ihrer Länge, beispielsweise um das Siebenfache ihrer Länge, gestreckt bzw. gereckt. Das hieraus resultierende Kunststoffnetz weist Maße, insbesondere eine maximale Foliendicke von beispielsweise 0,38 mm auf, die für Kunststoffdränbahnen nicht praktikabel sind. Zudem sind die Kunststoffnetze aufgrund des Streckens um ein Vielfaches ihrer Länge derart verformt, dass sich keine Fließbahnen entlang der Kunststoffnetze ausbilden können. Die gemäß dem Verfahren der DE 24 00 941 C2 herstellbaren Kunststoffnetze sind nicht als Kunststoffdränbahnen verwendbar.

Die Aufgabe der vorliegenden Erfindung besteht darin, ein verbessertes Verfahren zur Fertigung einer Kunststoffdränbahn anzugeben. Das Verfahren soll insbesondere flexibel sein und die Fertigung von Kunststoffdränbahnen mit hoher Druckbelastbarkeit ermöglichen.

Diese Aufgabe wird gelöst durch ein Verfahren mit den in Anspruch 1 angegebenen Schritten. Es wird ein bahnförmiger Grundkörper mit einer ersten Oberfläche und einer von der ersten Oberfläche um eine Grund-Bahndicke des Grundkörpers beabstandeten zweiten Oberfläche bereitgestellt. In die erste Oberfläche des Grundkörpers werden Rillen und in die zweite Oberfläche des Grundkörpers Gegen-Rillen eingebracht. Die Gegen-Rillen und die Rillen kreuzen sich an Kreuzungsstellen. Im Bereich der Kreuzungsstellen werden zur Fertigung der Kunststoffdränbahn Durchtrittsöffnungen zwischen den Rillen und den Gegen-Rillen ausgebildet.

Erfindungsgemäß wurde erkannt, dass das Fertigen der Kunststoffdränbahn aus einem bahnförmigen Grundkörper die Stabilität der Kunststoffdränbahn erhöht. Die Kunststoffdränbahn ist integral gefertigt. Druckbelastungen werden in der so hergestellten Kunststoffdränbahn über massive Stützpunkte aufgenommen und absorbiert. Ein Stabilitätsversagen, wie dies beispielsweise bei Geonetzen durch Umklappen oder Abrollen der separat gefertigten Stränge geschehen kann, ist bei der so gefertigten Kunststoffdränbahn vermieden. Die Kunststoffdränbahn weist eine hohe Stabilität, insbesondere eine hohe Druckfestigkeit, hohe Schubfestigkeit, hohe Kontaktscherfestigkeit und hohe Formstabilität auf. Ein ausreichendes Wasserableitvermögen ist über die gesamte Nutzungsdauer der Kunststoffdränbahn auch bei hohen Druckbelastungen gewährleistet.

Auf mindestens einer der Oberflächen des Grundkörpers wird in Bereichen zwischen den Rillen bzw. den Gegen-Rillen eine Oberflächenprofilierung erzeugt. Die Oberflächenprofilierung ermöglicht eine besonders hohe Kontaktscherfestigkeit der hergestellten Kunststoffdränbahn. Bevorzugt werden Oberflächenprofilierungen an beiden Oberflächen in Bereichen zwischen den Rillen beziehungsweise den Gegen-Rillen erzeugt. Die Oberflächenprofilierung kann besonders einfach mithilfe entsprechend profilierter Rillen- und/oder Gegen-Rillen-Prägewalzen beim Einprägen der Rillen und/oder Gegen-Rillen in die Oberflächen des Grundkörpers eingeprägt werden. Alternativ können auch spezielle, für das Einprägen der Oberflächenprofilierung ausgebildete Profilier-Prägewalzen vorgesehen sein.

Bei der Oberflächenprofilierung handelt es sich insbesondere um eine Mikroprofilierung. Die Mikroprofilierung kann eine Höhe zwischen 0,1 mm und 1,1 mm aufweisen. Die Höhe der Mikroprofilierung kann als sogenannte Asperity Height nach ASTM D7466 gemessen werden. Die Mikroprofilierung kann eine beliebige Formgebung aufweisen. Als besonders geeignet haben sich sogenannte Spikes und/oder geradlinige Erhebungen erwiesen.

Der bereitgestellte bahnförmige Grundkörper weist senkrecht zu der Grund-Bahndicke eine Längsrichtung und eine Querrichtung auf. Die Längsrichtung und die Querrichtung spannen eine Bahnebene auf. Die Längsrichtung wird auch als Produktionsrichtung (Engl.: Machine Direction (MD)) bezeichnet. Die Querrichtung wird entsprechend als quer zur Produktionsrichtung (Engl.: Cross-Machine Direction (CMD)) bezeichnet. Bei dem bahnförmigen Grundkörper sind die Länge des Grundkörpers, das heißt dessen Ausdehnung in Längsrichtung, und die Breite des Grundkörpers, das heißt die Ausdehnung in Querrichtung, wesentlich größer als die Grund-Bahndicke. Der Grundkörper ist flächig ausgebildet. Die Breite und Grund-Bahndicke des Grundkörpers können über dessen Länge variieren. Bevorzugt jedoch sind die Breite und/oder die Grund-Bahndicke konstant. Im Falle einer konstanten Grund-Bahndicke verlaufen die erste Oberfläche und die zweite Oberfläche parallel zueinander und parallel zu der Bahnebene.

Die Durchtrittsöffnungen stellen eine Perforation des Grundkörpers dar. Hierdurch ist die Wasserdurchlässigkeit der Kunststoffdränbahn senkrecht zu der Bahnebene gewährleistet. Das Wasser kann in den Rillen und Gegen-Rillen innerhalb der Bahnebene fließen und die Kunststoffdränbahn über die Durchtrittsöffnungen senkrecht zu der Bahnebene durchdringen.

Das Einbringen der Rillen und/oder Gegen-Rillen kann auf verschiedene Arten erfolgen, beispielsweise indem im Bereich der einzubringenden Rillen und/oder Gegen-Rillen Material des Grundkörpers abgetragen wird. Bevorzugt werden die Rillen und/oder Gegen-Rillen in den Grundkörper eingeformt. Das Einformen der Rillen und/oder Gegenrillen kann im Wesentlichen ohne Materialabtrag erfolgen. Das Einformen der Rillen und/oder Gegen-Rillen kann zusammen mit der Bereitstellung des Grundkörpers oder danach erfolgen. Beispielsweise werden die Rillen und/oder Gegen-Rillen durch Prägewalzen, insbesondere eines oder mehrerer Glättwerke, in die Oberflächen des bahnförmigen Grundkörpers eingeprägt.

Die Kunststoffdränbahn wird integral aus dem Grundkörper durch Einbringen der Rillen und Gegen-Rillen und Ausbilden der Durchtrittsöffnungen gefertigt. Die Abmessungen der fertigen Kunststoffdränbahn entsprechen daher im Wesentlichen den oben beschriebenen ursprünglichen Abmessungen des bereitgestellten Grundkörpers. Jedoch können sich aufgrund der Einbringung der Rillen und/oder Gegenrillen Änderungen in der Dicke des Grundkörpers senkrecht zu der Bahnebene ergeben. Beim Einformen der Rillen und/oder Gegen-Rillen ohne Materialabtrag, insbesondere beim Einprägen, wird das zuvor im Bereich der Rillen und/oder Gegen-Rillen befindliche Grundkörper-Material verdrängt. Durch diese Materialverdrängung kann die Dicke des Grundkörpers und damit die Dicke der Kunststoffdränbahn gegenüber der Grund-Bahndicke, mit der der Grundkörper bereitgestellt wird, vergrößert werden. Zur eindeutigen Unterscheidung der sich gegebenenfalls ändernden Dicke wird mit dem Begriff "Grund-Bahndicke" die Dicke des bereitgestellten Grundkörpers vor dem Einbringen der Rillen und/oder Gegen-Rillen bezeichnet. Der Begriff "Bahndicke" soll hingegen die Dicke des Grundkörpers nach dem Einformen der Rillen und Gegen-Rillen bezeichnen. Der Begriff "Bahndicke" bezieht sich daher auf die Dicke des Grundkörpers der fertigen Kunststoffdränbahn.

Die Bahndicke kann beispielsweise zwischen 4 mm und 20 mm, insbesondere zwischen 4 mm und 10 mm betragen. Werden die Rillen und/oder Gegen-Rillen eingeformt, insbesondere eingeprägt, muss der Grundkörper mit einer entsprechend geringeren Grund-Bahndicke, beispielsweise zwischen 2 mm und 10 mm, insbesondere zwischen 2 mm und 5 mm, bereitgestellt werden. In einigen Fällen kann das Einformen der Rillen und/oder Gegen-Rillen zu einer Verdoppelung, insbesondere Verdreifachung der Grund-Bahndicke in Folge der Materialverdrängung führen. Werden die Rillen und/oder Gegen-Rillen hingegen durch Materialabtragung in den Grundkörper eingebracht entspricht die Bahndicke des Grundkörpers der fertigen Kunststoffdränbahn im Wesentlichen der Grund-Bahndicke.

Die Breite der Kunststoffdränbahn entspricht im Wesentlichen der Breite des bereitgestellten Grundkörpers. In einigen Ausführungsformen des Verfahrens kann die Breite der Kunststoffdränbahn gegenüber dem ursprünglich bereitgestellten Grundkörper gezielt variiert werden. So kann der Grundkörper beispielsweise in Produktionsrichtung in die Länge gezogen werden, wobei es zu einer Reduktion der Breite der Kunststoffdränbahn kommt. Dies wird auch als Verstrecken des Grundkörpers bezeichnet. Ein Verstrecken kann insbesondere durch eine gegenüber einer Fördergeschwindigkeit des Grundkörpers erhöhten Abzugsgeschwindigkeit eines Glättwerks erfolgen. Alternativ kann der Grundkörper auch an parallel zu der Längsrichtung verlaufenden Längskanten gegriffen und in die Breite gezogen werden, wodurch die Breite der Kunststoffdränbahn vergrößert wird. Dieser Vorgang wird auch als Recken bezeichnet. Es ist also möglich, die Breite der Kunststoffdränbahn gezielt zu beeinflussen und an den jeweiligen Anwendungsfall anzupassen.

Die erste Oberfläche und die darin eingebrachten Rillen stellen eine erste Funktionsschicht der Kunststoffdränbahn dar. Die zweite Oberfläche und die darin eingebrachten Gegen-Rillen stellen eine zweite Funktionsschicht der Kunststoffdränbahn dar. Die Funktionsschichten ermöglichen ein Ableiten von Wasser entlang der Bahnebene des Grundkörpers über die Rillen bzw. GegenRillen. Über die Durchtrittsöffnungen stehen die Funktionsschichten der Kunststoffdränbahn miteinander in Fluidverbindung.

Das Verfahren ist flexibel anpassbar an die Anforderungen, die an die zu fertigende Kunststoffdränbahn gestellt werden. Insbesondere bietet das Verfahren eine große Gestaltungsfreiheit bei Anordnung, Struktur und Querschnitt der Rillen und der Gegen-Rillen. Hierüber kann insbesondere die Wasserwegigkeit der Rillen und/oder Gegen-Rillen flexibel beeinflusst und anwendungsspezifisch optimiert werden. Beispielsweise kann der Querschnitt der Rillen rechteckig mit oder ohne Eckversteifungen (Voute), tunnelförmig oder trapezförmig sein. Der Querschnitt der Rillen und Gegen-Rillen kann gleich oder unterschiedlich sein. Zudem können die Rillen und/oder Gegen-Rillen mit unterschiedlichen Breiten und Abständen in die jeweilige Oberfläche des Grundkörpers eingebracht werden. Beispielsweise ist es möglich, die Rillen breiter zu fertigen als deren jeweiliger Abstand ist, um somit eine hohe Wasserwegigkeit bei gleichzeitig geringem Flächengewicht der Kunststoffdränbahn zu gewährleisten.

Die Rillen und Gegen-Rillen kreuzen sich. Mit anderen Worten die Rillen verlaufen in der Bahnebene in einem endlichen Winkel zu den Gegen-Rillen. Beispielsweise kann der Winkel zwischen 20° und 160°, insbesondere zwischen 45° und 135°, insbesondere zwischen 80° und 100°, bevorzugt etwa 90° betragen. An den Kreuzungsstellen überlappen sich die Rillen und GegenRillen in Richtung der Bahnebene des Grundkörpers.

Das Vorsehen der Kreuzungsstellen bedeutet jedoch nicht, dass die Rillen und Gegen-Rillen an den Kreuzungsstellen auch senkrecht zu der Bahnebene, das heißt in Richtung der Bahndicke, einen Überlapp aufweisen, d.h. dass die Tiefen der Rillen und Gegen-Rillen in Summe größer sind als die Bahndicke des Grundkörpers. Vielmehr kann auch die Tiefe der Rillen und/oder der Gegen-Rillen, d.h. deren Abmessung senkrecht zu der Bahnebene, flexibel gestalten werden. Beispielsweise können die Rillen und/oder die Gegen-Rillen jeweils eine Tiefe aufweisen, die zwischen 10 % und 90 % der Bahndicke beträgt. Die Tiefe der Rillen und/oder der Gegen-Rillen kann konstant gewählt werden. Alternativ kann die Tiefe der Rillen und/oder Gegen-Rillen periodisch alternieren. Beispielsweise kann jede zweite Rille und jede dritte Gegen-Rille eine Tiefe von jeweils 50 % der Bahndicke haben, wohingegen die verbleibenden Rillen und/Gegen-Rillen eine geringere Tiefe aufweisen können.

Abgesehen von Ausbildung der Kreuzungsstellen können die Rillen und/oder Gegen-Rillen in beliebige Richtungen innerhalb der Bahnebene verlaufen. Bevorzugt verlaufen die Rillen parallel zueinander. Weiterhin bevorzugt verlaufen die Gegen-Rillen parallel zueinander.

Ein Verfahren nach Anspruch 2 ist flexibel und kostengünstig. Der Grundkörper kann mit variabel einstellbaren Grund-Bahndicken extrudiert werden. Die Extrusion des Grundkörpers hat weiterhin den Vorteil, dass der Grundkörper und damit die Kunststoffdränbahn mit beliebiger Länge gefertigt werden kann. Beispielsweise können Kunststoffdränbahnen mit einer Länge von mehr als 10 m, insbesondere mehr als 50 m, insbesondere mehr als 100 m, insbesondere mehr als 200 m gefertigt werden.

Die bevorzugte Verwendung eines Breitschlitzextruders ermöglicht die Fertigung breiter Kunststoffdränbahnen mit einer Breite von beispielsweise zwischen 2 m und 8 m. Die Breite der Kunststoffdränbahn beträgt insbesondere mindestens 4 m, insbesondere mindestens 6 m, insbesondere bis zu 8 m. Die Breite der Kunststoffdränbahn ist nur durch die Breite des Breitschlitzextruders begrenzt. Zusätzlich ist es möglich, die Breite der extrudierten Kunststoffdränbahn durch weitere Fertigungsschritte gezielt zu verändern. So kann die Breite der Kunststoffdränbahn durch ein Verstrecken des Grundkörpers, beispielsweise über ein Glättwerk, verringert werden. Alternativ ist auch ein Recken des Grundkörpers zur Erhöhung der Breite möglich.

Die Extrusion gewährleistet zudem die Bereitstellung des Grundkörpers mit gleichbleibender Qualität. Insbesondere bietet die Extrusion die Möglichkeit einer hohen Flexibilität bei der Wahl des für den Grundkörper zu verwendenden Werkstoffs. So können verschiedenste Kunststoffe und Kunststoffmischungen verwendet werden. Auch können verschiedene Werkstoffe coextrudiert zu dem Grundkörper verbunden werden.

Die Extrusion des Grundkörpers hat weiterhin den Vorteil, dass weitere Komponenten der Kunststoffdränbahn zusammen mit dem Grundkörper bereitgestellt werden können. Besonders bevorzugt wird der Grundkörper zusammen mit einer Bewehrungsstruktur bereitgestellt. Hierzu können Endlosgarne bereitgestellt und beim Extrudieren des Grundkörpers in diesen eingeführt werden. Hierdurch ist es möglich, Endlosgarne in Längsrichtung über die gesamte Länge des Grundkörpers in diesen einzubetten. Die Endlosgarne ermöglichen eine einaxiale Bewehrung des Grundkörpers. Hierfür verwendbare Garne sind insbesondere Multifilamentgarne, beispielsweise Multifilamentgarne bestehend aus Polyethylenterephthalat (PET) oder Polyvinylalkohol (PVAL). Alternativ können auch andere Garne, beispielsweise Glasfasern, Basaltfasern und/oder Stahlfasern, bei der Extrusion in den Grundkörper eingebettet werden.

Ein Verfahren nach Anspruch 3 ist flexibel in der Materialwahl. Polyethylen (PE), Polypropylen (PP), Polyamid (PA), Polystyrol (PS), Acrylnitril-Butadien-Styrol-Copolymer (ABS), Holz-Kunststoff-Verbundwerkstoff (WPC), Biopolymere, Polyvinylchlorid (PVC) und/oder Polyethylenterephthalat (PET) haben sich als besonders geeignet für die Herstellung von Kunststoffdränbahnen erwiesen. Diese Materialien sind recycelbar, alterungs-, witterungs- sowie chemisch beständig und weisen ein geringes Kriechverhalten auf. Zudem sind sämtliche dieser Materialien für die Extrusion geeignet. Besonders bevorzugt kommt Polyethylen, insbesondere in den Formen PE-LLD, PE 80, PE 100, PE 100-RC, PE-EL, PE-MD und/oder PE-HD zum Einsatz. Zudem ermöglicht das Verfahren, sämtliche der oben genannten Materialien sowohl als Neuware als auch als Umlaufmaterial (Engl.: re-work material), Regenerat (Engl.: post-industrial material (PIM)) und/oder Rezyklat (Engl.: post-consumer material (PCM)) zu verarbeiten. Dies erlaubt eine kostengünstige und ressourcenschonende Fertigung der Kunststoffdränbahn.

Abhängig von den Anforderungen an die Kunststoffdränbahn kann das geeignete Material oder die geeignete Mischung dieser Materialien gewählt werden. Zudem können Füllstoffe, insbesondere inerte Füllstoffe den verwendeten Materialien zugegeben werden. Beispiele für geeignete Füllstoffe sind Gesteinsmehl, Holzmehl, Biopolymere und/oder Kurzfasern.

Bei der Verwendung dieser bevorzugten Materialien kann die Kunststoffdränbahn ein Flächengewicht zwischen 1.500 g/m² und 18.000 g/m² aufweisen. Dies hat den Vorteil, dass die Kunststoffdränbahn relativ zu ihrer Abmessung ein geringes Gewicht aufweist und leicht zu transportieren ist. Das Flächengewicht wird nach DIN EN ISO 9864 ermittelt.

Ein Verfahren nach Anspruch 4 ist effizient und einfach umsetzbar. Beispielsweise können die Rillen in Längsrichtung oder senkrecht hierzu mit geeigneten Prägewalzen eines Glättwerks eingeprägt werden. Für den Fall, dass der Grundkörper extrudiert wird, entspricht die Längsrichtung der Maschinenrichtung (MD). In diesem Fall werden die Rillen besonders bevorzugt parallel zu der Längsrichtung in die erste Oberfläche des Grundkörpers eingeformt, da diese dann die gesamte Länge der Kunststoffdränbahn abdecken. Das Einformen der Rillen kann direkt beim Extrudieren des Grundkörpers erfolgen, indem der Extruder einen entsprechend geformten Austragsschlitz bzw. Extruderschlitz aufweist. Das Einformen der Rillen erfolgt dann zusammen mit der Bereitstellung des Grundkörpers.

Bevorzugt werden die Gegen-Rillen parallel zu der Querrichtung in die zweite Oberfläche des Grundkörpers eingeformt. Besonders bevorzugt verlaufen die Rillen und die Gegen-Rillen senkrecht, d.h. in einem Winkel von etwa 90°, zueinander.

Ein Verfahren nach Anspruch 5 ist effizient. Insbesondere werden die Rillen in Richtung senkrecht zu der ersten Oberfläche mit einer Tiefe d₁ und die Gegen-Rillen in Richtung senkrecht zu der zweiten Oberfläche mit einer Tiefe d₂ eingeformt, insbesondere eingeprägt. Wenn die Tiefe d₁ der Rillen und die Tiefe d₂ der Gegen-Rillen zusammen größer oder gleich der Bahndicke des Grundkörpers ist, ist es möglich, die Durchtrittsöffnungen rein aufgrund des Einbringens, insbesondere Einformens, der Rillen und der Gegen-Rillen auszubilden. Vorteilhafterweise haben die Rillen und Gegen-Rillen nach dem Einbringen die zur Ausbildung von Durchtrittsöffnungen nötigen Tiefen d₁ bzw. d₂. Weitere Verfahrensschritte zur Ausbildung der Durchtrittsöffnungen sind nicht nötig. Zudem hat eine derart gefertigte Kunststoffdränbahn den Vorteil eines hohen Wasserableitvermögens. Besonders bevorzugt ist die Summe aus d₁ und d₂ größer als die Bahndicke des Grundkörpers. In diesem Fall weist die Kunststoffdränbahn eine hohe Stabilität bei gleichzeitig hohem Wasserableitvermögen auf.

Bevorzugt werden die Durchtrittsöffnungen pneumatisch, hydraulisch und/oder mechanisch eingebracht. Dies gewährleistet eine hohe Wasserdurchlässigkeit senkrecht zu der Bahnebene. Das pneumatische, hydraulische und/oder mechanische Einbringen der Durchtrittsöffnungen gewährleistet eine Perforation des Grundkörpers unabhängig von der Tiefe d₁ der Rillen und der Tiefe d₂ der Gegen-Rillen. Die Durchtrittsöffnungen können beispielsweise durch Druckluft, Wasserstrahlen und/oder durch Durchstechen beziehungsweise Durchlochen des im Bereich der Kreuzungsstellen der Rillen und Gegen-Rillen verbleibenden Grundkörper-Materials eingebracht werden. Die Verwendung von Druckluft hat sich insbesondere dann als geeignet herausgestellt, wenn nach dem Einbringen, insbesondere Einformen der Rillen und/oder der Gegen-Rillen nur noch eine dünne wasserundurchlässige Materialschicht vorhanden ist.

Ein Verfahren nach Anspruch 6 gewährleistet die Fertigung besonders einfach lager- und transportierbarer Kunststoffdränbahnen. Aufgrund der Kerbung ist die Kunststoffdränbahn besonders einfach auf Rollen, insbesondere Rollen kleinen Durchmessers aufrollbar. Ein für die Lagerung und den Transport benötigter Stauraum ist vermindert.

Die Kerbung kann beispielsweise durch Einschnitte in den Grundkörper ohne Materialabtrag erfolgen. Besonders bevorzugt erfolgt die Kerbung in Bereichen zwischen den Rillen und/oder den Gegen-Rillen. Geeignet ist insbesondere eine Kerbung die parallel oder senkrecht zu der Längsrichtung erfolgt. Beispielsweise verläuft die Kerbung parallel zu den Rillen beziehungsweise Gegen-Rillen auf der jeweils anderen Oberfläche. Besonders bevorzug verläuft die Kerbung parallel zur Querrichtung der Kunststoffdränbahn auf derjenigen der beiden Oberflächen, die beim Aufwickeln der Kunststoffdränbahn auf der Außenseite der Wicklung zu liegen kommt. Durch die Kerbung wird das Widerstandsmoment des Querschnitts in Wickelrichtung reduziert. Das aufzubringende Biegemoment ist somit kleiner und die Kunststoffdränbahn kann mit kleineren Wickel-Radien aufgewickelt werden. Aufgrund der Kerbung in Querrichtung ist die Kunststoffdränbahn in Längsrichtung flexibler.

Die Kerbung ist insbesondere zusätzlich zu den Rillen und den Gegen-Rillen in den Grundkörper eingebracht. Alternativ kann die Kerbung zum Einbringen der Rillen und/oder Gegen-Rillen dienen. Beispielsweise kann zum Einbringen der Gegen-Rillen die zweite Oberfläche gekerbt werden. Zur Ausbildung der Gegen-Rillen wird der gekerbte Grundkörper insbesondere in Richtung senkrecht zu der Kerbung verstreckt. Durch das Verstrecken ist es möglich die Kerben zu öffnen und die Gegen-Rillen zu formen. Bevorzugt werden durch das Verstrecken auch die Durchlassöffnungen zwischen den Rillen und den sich öffnenden Gegen-Rillen ausgebildet. Bevorzugt verläuft die Kerbung in Querrichtung des Grundkörpers. Das Verstrecken erfolgt insbesondere in Längsrichtung, beispielsweise durch eine erhöhte Abzugsgeschwindigkeit eines nachgeschalteten Glättwerks.

In einer bevorzugten Variante werden die Rillen in Längsrichtung des Grundkörpers mit einer Tiefe d₁ eingebracht, insbesondere eingeformt insbesondere eingeprägt. Die zweite Oberfläche kann in Querrichtung gekerbt werden. Die Kerbung weist bevorzugt eine Tiefe d₂ auf, die mindestens der Differenz zwischen der Bahndicke des Grundkörpers und der Tiefe d₁ der Rillen entspricht. Somit ist auf einfache Weise infolge von Kerbung und anschließender geringfügiger Verstreckung eine Öffnung der vorher mit Rillen in Längsrichtung versehenen Bahn möglich. Insbesondere wird die Kunststoffdränbahn an sich aufgrund der Verstreckung ausbildenden Durchlassöffnungen senkrecht zu ihrer Ebene durchlässig. Aufgrund der sich öffnenden GegenRillen wird bevorzugt eine Durchlässigkeit in Querrichtung in der Ebene der zweiten Oberfläche erzeugt.

Ein Verfahren nach Anspruch 7 ermöglicht die Fertigung einer Kunststoffdränbahn mit besonders hoher Wasserwegigkeit. Eine entsprechende gemittelte Rautiefe im Bereich der Rillen und/oder der Gegen-Rillen erlaubt die Erzeugung stetiger Fließkanäle. Die Rillen und/oder Gegen-Rillen weisen im Mikrobereich insbesondere keine Unebenheiten, wie beispielsweise Kerben, auf. Die Bereiche mit entsprechender gemittelter Rautiefe weisen eine im Wesentlichen glatte Oberfläche auf. Die vorteilhafte Rautiefe der Rillen und/oder Gegen-Rillen kann beispielsweise durch die Verwendung entsprechender Prägewalzen, also Prägewalzen mit dieser Rautiefe, zum Einprägen der Rillen und/oder Gegen-Rillen in die jeweiligen Oberflächen der Gegen-Rillen des Grundkörpers erfolgen.

Bevorzugt wird eine Abdeckschicht auf mindestens eine der Oberflächen des Grundkörpers aufgebracht. Dies erweitert das Anwendungsspektrum der hergestellten Kunststoffdränbahn. Die Kunststoffdränbahn kann als Geoverbundwerkstoff eingesetzt werden. Bevorzugt ist auf beiden Oberflächen des Grundkörpers je eine Abdeckschicht aufgebracht. Als Abdeckschichten haben sich insbesondere Geotextilien, insbesondere PP-Vliesstoffe, PET Vliesstoffe und/oder PE-Vliesstoffe als Filterlage, bewährt. Die Abdeckschicht kann mit der jeweiligen Oberfläche des Grundkörpers thermisch oder mittels Klebstoff, insbesondere Hotmelt-Klebstoff, verbunden werden.

Es ist eine weitere Aufgabe der Erfindung, eine verbesserte Kunststoffdränbahn bereitzustellen. Die bereitgestellte Kunststoffdränbahn soll insbesondere eine hohe Stabilität bei gleichzeitig hohem Wasserableitvermögen aufweisen.

Diese Aufgabe wird gelöst durch eine Kunststoffdränbahn, die durch das erfindungsgemäße Verfahren hergestellt ist. Die Vorteile der Kunststoffdränbahn ergeben sich durch das zu deren Herstellung verwendete, zuvor beschriebene Verfahren.

Diese Aufgabe wird zudem durch eine Kunststoffdränbahn mit den in Anspruch 8 genannten Merkmalen gelöst. Die Kunststoffdränbahn weist einen bahnförmigen Grundkörper mit einer ersten Oberfläche und einer von der ersten Oberfläche um eine Bahndicke des Grundkörpers beabstandete zweite Oberfläche auf. Zudem umfasst die Kunststoffdränbahn in die erste Oberfläche des Grundkörpers eingebrachte Rillen und in die zweite Oberfläche des Grundkörpers eingebrachte Gegen-Rillen, wobei sich die Gegen-Rillen und die Rillen an Kreuzungsstellen kreuzen. Bevorzugt sind die Rillen und/oder Gegen-Rillen in die jeweilige Oberfläche eingeformt, insbesondere eingeprägt. An den Kreuzungsstellen sind zudem Durchtrittsöffnungen zwischen den Rillen und den Gegen-Rillen vorhanden. Aufgrund des einstückigen, bahnförmigen Grundkörpers weist die Kunststoffdränbahn eine hohe Stabilität auf, wie sie oben in Bezug auf das Verfahren bereits beschrieben wurde. Die Kunststoffdränbahn ist einfach und kostengünstig fertigbar. Sie weist eine flexible Struktur, insbesondere eine variable, frei wählbare und über die Breite konstante Bahndicke auf. Auch die Formen, Tiefen und/oder Anordnungen der Rillen und/oder Gegen-Rillen sind frei wählbar.

Die Kunststoffdränbahn weist eine Oberflächenprofilierung auf mindestens einer der Oberflächen des Grundkörpers im Bereich zwischen den Rillen bzw. zwischen den Gegen-Rillen auf. Die Kunststoffdränbahn weist eine hohe Kontaktscherfestigkeit auf. Die Oberflächenprofilierung ist insbesondere als Mikroprofilierung ausgebildet. Die Höhe der Mikroprofilierung kann beispielsweise als sogenannte Asperity Height nach ASTM D7466 gemessen werden. Die Mikroprofilierung weist bevorzugt eine Höhe zwischen 0,1 mm und 1,1 mm auf. Die Mikroprofilierung kann besonders bevorzugt sogenannte Spikes und/oder geradlinige Erhebungen aufweisen.

Bevorzugt weisen die Rillen und/oder Gegen-Rillen einen tunnelförmigen, rechteckförmigen oder trapezförmigen Querschnitt auf. Eine derartige Kunststoffdränbahn weist eine hohe Stabilität und ein hohes sowie anpassbares Wasserableitvermögen auf. Durch die Form des Querschnitts der Rillen und/oder der Gegen-Rillen wird eine gezielte Verteilung der auf die Kunststoffdränbahn wirkenden Druck- und/oder Scherkräfte ermöglicht. Zudem wird die Wasserwegigkeit der Rillen und/oder der Gegen-Rillen durch deren Querschnittsform anpassbar.

Eine Kunststoffdränbahn gemäß Anspruch 9 eignet sich für großflächige Anwendungen. Bevorzugt weist die Kunststoffdränbahn eine Breite von mehr als 4 m, insbesondere mehr als 6 m, insbesondere bis zu 8 m auf.

Eine Kunststoffdränbahn nach Anspruch 10 hat ein besonders hohes Wasserableitvermögen. Die geringe gemittelte Rautiefe im Bereich der Rillen und/oder der Gegen-Rillen bewirkt, dass in den Rillen und/oder Gegen-Rillen im Mikrobereich keine Unebenheiten vorhanden sind. Hierdurch sind stetige Fließkanäle gewährleistet.

Die Kunststoffdränbahn nach Anspruch 11 weist ein geringes Gewicht bei gleichzeitig hoher innerer Schubfestigkeit auf. Hierdurch ist die Kunststoffdränbahn insbesondere einfach zu transportieren und leicht zu verbauen.

Eine Kunststoffdränbahn nach Anspruch 12 ist flexibel einsetzbar und robust. Je nach Anforderungen kann das geeignete Material und/oder die geeignete Materialmischung, gegebenenfalls unter Beimischung von Füllstoffen, gewählt werden. Die Kunststoffdränbahn ist chemisch beständig und alterungs- sowie witterungsbeständig. Zudem ist die Kunststoffdränbahn recycelbar.

Besonders bevorzugt ist die Kunststoffdränbahn aus Umlaufmaterial (re-work material), Regenerat (post-industrial material) und/oder Rezyklat (post-consumer material) gefertigt. Eine Kunststoffdränbahn aus derartigen Materialien ist kostengünstig und ressourcenschonend.

Bevorzugt weist die Kunststoffdränbahn auf mindestens einer der Oberflächen des Grundkörpers eine Abdeckschicht auf. Eine derartige Kunststoffdränbahn hat ein breites Anwendungsspektrum. Die Eigenschaften der Kunststoffdränbahn können durch die Wahl geeigneter Abdeckschichten noch besser an den jeweiligen Anwendungsfall angepasst werden. Geeignete Abdeckschichten sind insbesondere Geotextilien, besonders bevorzugt PP-Vliesstoffe, PET Vliesstoffe und/oder PE-Vliesstoffe, die beispielsweise mit dem Grundkörper thermisch oder mittels Klebstoff, insbesondere Hotmelt-Klebstoff, verbunden sind. Besonders bevorzugt weist die Kunststoffdränbahn auf jeder Oberfläche des Grundkörpers je eine Abdeckschicht auf.

Eine Kunststoffdränbahn nach Anspruch 13 ist besonders stabil und weist ein breites Anwendungsspektrum auf. Durch die Bewehrungsstruktur kann die Kunststoffdränbahn besonders große Kräfte absorbieren, ohne dass die Wasserwegigkeit der Kunststoffdränbahn beeinträchtigt ist. Zudem kann die Kunststoffdränbahn zur Bewehrung eingesetzt werden, ohne dass externe Bewehrungselemente, wie beispielsweise Geogitter, benötigt werden.

Bevorzugt erstreckt sich die mindestens eine Bewehrungsstruktur in Längsrichtung über die gesamte Länge des Grundkörpers und damit über die gesamte Länge der Kunststoffdränbahn. Besonders bevorzugt sind zwischen jeweils zwei in Längsrichtung verlaufenden Rillen entsprechende Bewehrungsstrukturen angeordnet. Hierdurch wird eine besonders stabile einaxiale Bewehrung der Kunststoffdränbahn realisiert. Für die Bewehrungsstruktur steht prinzipiell das gesamte Volumen des Grundkörpers zwischen den Längsrillen zur Verfügung.

Die Bewehrungsstruktur kann Garne, insbesondere Kunststoffgarne, bevorzugt Multifilamentgarne, beispielsweise bestehend aus Polyethylenterephthalat (PET) und/oder Polyvinylalkohol (PVAL) umfassen. Alternativ und/oder zusätzlich kann die mindestens eine Bewehrungsstruktur auch Glasfasern, Basaltfasern und/oder Stahlfasern umfassen.

Die Bewehrungsstruktur ist bevorzugt vollständig in das Grundkörpermaterial eingebettet. Die Bewehrungsstruktur ist hierdurch vor Umwelteinflüssen geschützt.

Zur Fertigung der mindestens einen Bewehrungsstruktur können Endlosgarne aus dem die Bewehrungsstruktur bildenden Material bereitgestellt werden und in die den Grundkörper formende Formmasse eingebettet werden. Besonders bevorzugt erfolgt dies bei einer Extrusion des Grundkörpers. Hierbei können die Garne an der geeigneten Position einfach in den extrudierten Grundkörper eingebracht werden. Die mindestens eine Bewehrungsstruktur und der Grundkörper werden integral gefertigt.

Weitere Merkmale, Vorteile und Einzelheiten der Erfindung ergeben sich aus den nachfolgenden Ausführungsbeispielen und den zugehörigen Figuren. Es zeigen:
- Fig. 1: eine perspektivische Ansicht einer Kunststoffdränbahn,
- Fig. 2: einen Längsschnitt durch die Kunststoffdränbahn gemäß Fig. 1 entlang der Schnittkante II-II,
- Fig. 3: einen Querschnitt durch die Kunststoffdränbahn gemäß Fig. 1 entlang der Schnittkante III-III,
- Fig. 4: einen schematischen Verfahrensablauf zur Fertigung einer Kunststoffdränbahn,
- Fig. 5: eine schematische Darstellung einer Fertigungsvorrichtung zur Fertigung einer Kunststoffdränbahn,
- Fig. 6: eine schematische Darstellung einer weiteren Fertigungsvorrichtung zur Fertigung einer Kunststoffdränbahn,
- Fig. 7: eine schematische Darstellung alternativer Querschnitte der Rillen der Kunststoffdränbahn, und
- Fig. 8: einen Querschnitt durch ein weiteres Ausführungsbeispiel einer Kunststoffdränbahn.

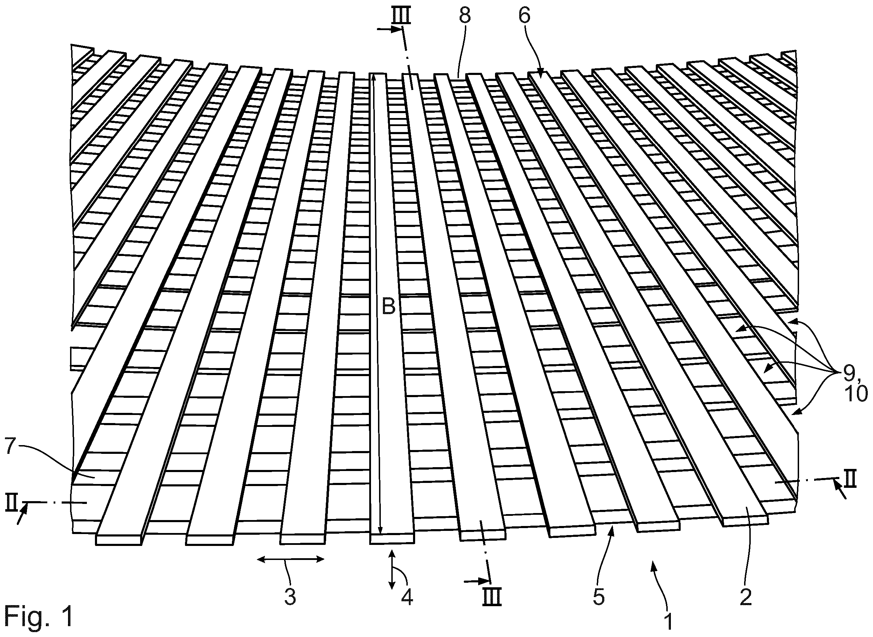

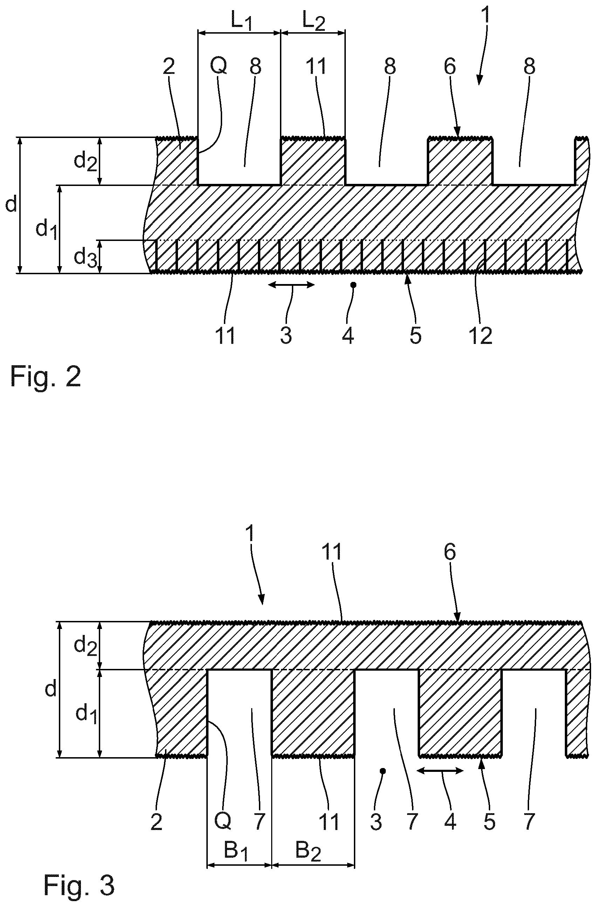

In den Fig. 1 bis 3 ist ein Ausführungsbeispiel einer Kunststoffdränbahn 1 gezeigt. Die Kunststoffdränbahn 1 weist einen bahnförmigen Grundkörper 2 auf. Der bahnförmige Grundkörper 2 erstreckt sich in einer Längsrichtung 3 und einer senkrecht hierzu verlaufenden Querrichtung 4. Die Fig. 1 zeigt nur einen Teil der Kunststoffdränbahn 1. Die Kunststoffdränbahn 1 erstreckt sich in Längsrichtung 3 über den in Fig. 1 gezeigten Teil hinaus. In der Fig. 2 ist ein Längsschnitt durch die Kunststoffdränbahn 1 in Längsrichtung 3 entlang der Schnittkante II-II gezeigt.

In Fig. 3 ist ein Querschnitt durch die Kunststoffdränbahn 1 in Querrichtung 4 entlang der Schnittkante III-III gezeigt.

Die Kunststoffdränbahn 1 weist in der Längsrichtung 3 eine Länge und in der Querrichtung 4 eine Breite B auf. Die Längsrichtung 3 und die Querrichtung 4 spannen eine Bahnebene auf. Senkrecht zu der Bahnebene, also in einer zu der Längsrichtung 3 und der Querrichtung 4 senkrechten Richtung, weist der Grundkörper 2 der Kunststoffdränbahn 1 eine konstante Bahndicke d auf. Die Länge und die Breite B sind um ein Vielfaches größer als die Bahndicke d. Die Kunststoffdränbahn 1 weist eine Breite B von 2 m auf. Auch größere Breiten B von bis zu 8 m und darüber sind möglich. Die Länge ist prinzipiell unbeschränkt und kann die Breite B übersteigen. Beispielsweise sind Längen von über 10 m, insbesondere über 50 m, insbesondere über 100 m, insbesondere über 200 m möglich. Die Bahndicke d beträgt typischerweise zwischen 4 mm und 10 mm.

Der Grundkörper 2 weist eine erste Oberfläche 5 auf, die in den Fig. 1 bis 3 die Unterseite der Kunststoffdränbahn 1 darstellt. Zudem hat der Grundkörper 2 eine von der ersten Oberfläche 5 um die Bahndicke d beabstandete zweite Oberfläche 6, die in den Figuren als die Oberseite der Kunststoffdränbahn 1 gezeigt ist. In die erste Oberfläche 5 sind Rillen 7 eingeformt. Die Rillen 7 verlaufen parallel zueinander in Längsrichtung 3 der Kunststoffdränbahn. In die zweite Oberfläche 6 des Grundkörpers 2 sind Gegen-Rillen 8 eingeformt, die parallel zueinander in Querrichtung 4 verlaufen. Die Rillen 7 und die Gegen-Rillen 8 verlaufen daher senkrecht zueinander und kreuzen sich an Kreuzungsstellen 9. Im Bereich der Kreuzungsstellen 9 sind Durchtrittsöffhungen 10 zwischen den Rillen 7 und den Gegen-Rillen 8 ausgebildet.

Die Rillen 7 und die Gegen-Rillen 8 stellen Fließkanäle für durch die Kunststoffdränbahn 1 abzuleitendes Wasser dar. Durch die Durchtrittsöffnungen 10 ist eine Wasserdurchlässigkeit der Kunststoffdränbahn 1 senkrecht zu deren Bahnebene gewährleistet. Die Ausgestaltung der Kunststoffdränbahn 1 als bahnförmiger Grundkörper 2, in dem Rillen 7 und Gegen-Rillen 8 eingeformt sind, gewährleistet eine gute Wasserwegigkeit bei gleichzeitig hoher Stabilität, insbesondere hoher Druckfestigkeit, hoher innerer Schubfestigkeit, hoher Kontaktscherfestigkeit und hoher Formstabilität. Die Kunststoffdränbahn hat über ihre gesamte Nutzungsdauer ein hohes Wasserableitvermögen.

Die Rillen 7 und die Gegen-Rillen 8 weisen einen Querschnitt Q auf. Der Querschnitt Q ist jeweils rechteckig. Die Rillen 7 weisen in der Querrichtung 4 einen regelmäßigen Abstand B₂ und eine Breite B₁ auf. Die Gegen-Rillen 8 weisen in der Längsrichtung 3 eine Breite L₁ und einen regelmäßigen Abstand L₂ auf. Der Abstände B₂ und L₂ können zwischen 2 mm und 16 mm, insbesondere zwischen 3 mm und 10 mm betragen. Die Breiten B₁ und L₁ betragen beispielsweise zwischen 2 mm und 12 mm, insbesondere zwischen 3 mm und 10 mm.

Der rechteckige Querschnitt Q der Rillen 7 und der Gegen-Rillen 8 gewährleistet ein hohes Wasserableitvermögen. Gleichzeitig weist der Grundkörper 2 eine hohe Stabilität auf.

Die Rillen 7 sind mit einer Tiefe d₁ senkrecht zu der Bahnebene des Grundkörpers 2 in die erste Oberfläche 5 eingeformt. Die Gegen-Rillen 8 sind mit einer Tiefe d₂ senkrecht zu der Bahnebene in die zweite Oberfläche 6 eingeformt. Die Tiefen d₁ und d₂ sind derart bemessen, dass deren Summe gleich der Bahndicke d ist: d₁ + d₂ = d. Dies bewirkt, dass die Rillen 7 mit den GegenRillen 8 im Bereich der Kreuzungsstellen 9 senkrecht zu der Bahnebene überlappen, sodass die Durchtrittsöffnungen 10 entstehen.

Um die Wasserwegigkeit der Rillen 7 und der Gegen-Rillen 8 weiter zu erhöhen, weisen deren durch den Grundkörper 2 gebildeten Randflächen eine gemittelte Rautiefe nach DIN 4768 Teil 1 zwischen 0,2 µm und 0,7 µm auf. Dies gewährleistet stetige Fließkanäle in den Rillen 7 und Gegen-Rillen 8. Unebenheiten im Mikrobereich sind vermieden.

In Bereichen zwischen den Rillen 7 beziehungsweise den Gegen-Rillen 8 weisen die erste Oberfläche 5 und die zweite Oberfläche 6 eine Oberflächenprofilierung in Form einer Mikroprofilierung 11 auf. Die Mikroprofilierung 11 weist sogenannte Spikes und/oder geradlinige Erhebungen mit einer Höhe zwischen 0,1 mm und 1,1 mm auf. Die Höhe der Mikroprofilierung 11 wird als Asperity Height nach ASTM D7466 gemessen. Die Mikroprofilierung 11 bewirkt eine verbesserte Kontaktscherfestigkeit der Kunststoffdränbahn 1.

Der Grundkörper 2 der Kunststoffdränbahn 1 umfasst Polyethylen (PE). Besonders geeignet sind PE-LLD, PE 80, PE 100, PE 100-RC, PE-EL, PE-MD oder PE-HD. Alternative Materialien für den Grundkörper 2 der Kunststoffdränbahn 1 sind Polypropylen (PP), Polyamid (PA), Polystyrol (PS), Acrylnitril-Butadien-Styrol-Copolymer (ABS), Holz-Kunststoff-Verbundwerkstoffe (WPC), Biopolymere, Polyvinylchlorid (PVC) und/oder Polyethylenterephthalat (PET). In einigen Ausführungsbeispielen ist der Grundkörper 2 aus Umlaufmaterial (re-work material), Regenerat (post-industrial material) und/oder Rezyklat (post-consumer material) gefertigt. In wiederum anderen Ausführungsbeispielen sind dem Grundkörper 2 auch Füllstoffe, insbesondere inerte Füllstoffe beigemischt. Beispiele hierfür sind Gesteinsmehl, Holzmehl, Biopolymere und Kurzfasern. Durch das Beimischen von Füllstoffen können die Materialeigenschaften des Grundkörpers 2 der Kunststoffdränbahn 1 noch besser an die zu erfüllenden Anforderungen angepasst werden.

Die Kunststoffdränbahn 1 weist ein Flächengewicht zwischen 1.500 g/m² und 18.000 g/m² auf. Das Flächengewicht der Kunststoffdränbahn wird nach DIN EN ISO 9864 bestimmt. Die Kunststoffdränbahn 1 weist bezogen auf Ihre Abmessungen ein geringes Gewicht auf und ist daher leicht transportierbar.

Die Transportierbarkeit wird weiter dadurch erhöht, dass die erste Oberfläche 5 gekerbt ist. Die Kerben 12 verlaufen parallel zueinander in Querrichtung 4. Die Kerben 12 verlaufen parallel zu den Gegen-Rillen 8. Die Kerben 12 sind Einschnitte in den Grundkörper 2.

Die Kerben 12 weisen eine Tiefe d₃ senkrecht zu der Bahnebene auf, die geringer ist als die Bahndicke d abzüglich der Tiefe d₂ der Gegen-Rillen 8: d - d₂ > d₃. Die Kerbung des Grundkörpers 2 mithilfe der Kerben 12 verbessert das Aufrollen der Kunststoffdränbahn auf TransportRollen.

Die Kunststoffdränbahn 1 kann in ihrer in den Fig. 1 bis 3 gezeigten Form verwendet werden. Zudem kann die Kunststoffdränbahn 1 um Abdeckschichten auf den Oberflächen 5, 6 ergänzt sein. Geeignete Abdeckschichten sind Geotextilien, insbesondere aus PP-Vliesstoffen, die mit der Kunststoffdränbahn 1 thermisch verbunden werden.

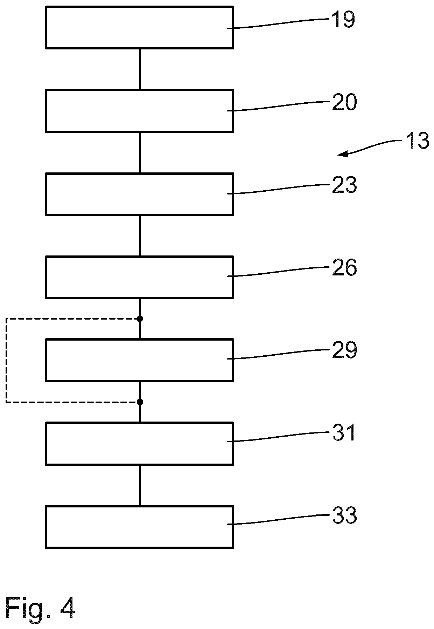

Mit Bezug auf die Fig. 4 bis 6 wird im Folgenden die Fertigung der Kunststoffdränbahn 1 erläutert. In Fig. 4 ist ein schematischer Verfahrensablauf eines geeigneten Fertigungsverfahrens 13 gezeigt. Das Fertigungsverfahren 13 ist in funktionale Fertigungsschritte unterteilt. Die einzelnen Fertigungsschritte stellen daher keine streng chronologische Abfolge dar. Vielmehr bestimmt sich die zeitliche Abfolge der Fertigungsschritte durch die für die Durchführung des Fertigungsverfahrens 13 verwendete Fertigungsvorrichtung.

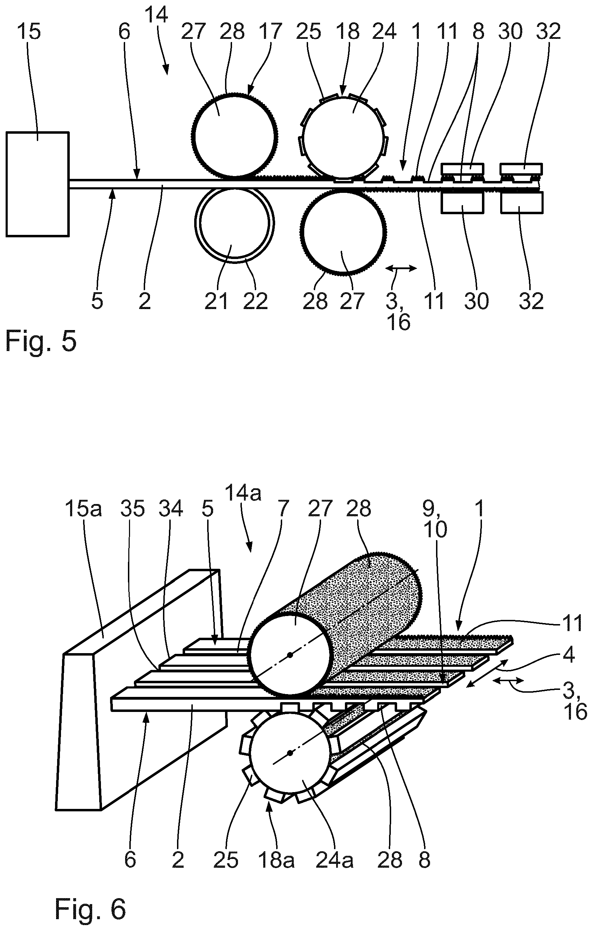

Fig. 5 zeigt schematisch ein Ausführungsbeispiel einer für die Durchführung des Fertigungsverfahrens 13 verwendbaren Fertigungsvorrichtung 14. Die Fertigungsvorrichtung 14 umfasst im Wesentlichen einen Breitschlitzextruder 15 und zwei in Maschinenrichtung 16 aufeinanderfolgende Glättwerke 17, 18.

In einem Bereitstellungsschritt 19 wird der bahnförmige Grundkörper 2 mithilfe des Breitschlitzextruders 15 extrudiert. Die Breite B des Grundkörpers 2 und damit der Kunststoffdränbahn 1 ist daher durch die Breite des Breitschlitzextruders 15 festgelegt. Der Grundkörper 2 und die Kunststoffdränbahn 1 können mithilfe des Breitschlitzextruders 15 in einer beliebigen Länge erzeugt werden, insbesondere endlos erzeugt werden. Der Breitschlitzextruder 15 gibt somit auch die Längsrichtung 3, die der Maschinenrichtung 16 entspricht, und die Querrichtung 4 der Kunststoffdränbahn 1 vor. Mithilfe des Breitschlitzextruders 15 können alle oben genannten für den Grundkörper 2 verwendbaren Materialien für sich oder in Kombination im Co-Extrusionsverfahren verarbeitet werden.

Im Bereitstellungsschritt 19 wird der bahnförmige Grundkörper 2 mit einer Grund-Bahndicke extrudiert.

In einem Rillen-Einformschritt 20 werden die Rillen 7 in die erste Oberfläche 5 des Grundkörpers 2 eingeformt. Hierfür weist das erste Glättwerk 17 eine Rillen-Prägewalze 21 mit an den Querschnitt Q der Rillen 7 angepassten Rillenwerkzeugen 22 auf. Die Rillen 7 werden mithilfe der Rillen-Werkzeuge 22 der Rillen-Prägewalze 21 in den Grundkörper 2 eingeprägt. Die Rillen-Werkzeuge 22 weisen eine gemittelte Rautiefe auf, die der gemittelten Rautiefe der Randflächen der Rillen 7 entspricht.

In einem Gegen-Rillen-Einformschritt 23 werden die Gegen-Rillen 8 in die zweite Oberfläche 6 des Grundkörpers 2 eingeformt. In der Fertigungsvorrichtung 14 geschieht dies mithilfe einer Gegen-Rillen-Prägewalze 24 des zweiten Glättwerks 18. Die Gegen-Rillen-Prägewalze 24 weist Gegen-Rillen-Werkzeuge 25 auf, deren Querschnitt dem Querschnitt Q der Gegen-Rillen 8 entspricht. Die Gegen-Rillen-Werkzeuge 25 haben eine gemittelte Rautiefe, die der gemittelten Rautiefe der Gegen-Rillen 8 entspricht.

Beim Einprägen der Rillen 7 und der Gegen-Rillen 8 im Rillen-Einformschritt 20 bzw. im Gegen-Rillen-Einformschritt 23 wird das sich im Bereich des Rillen 7 bzw. Gegen-Rillen 8 ursprünglich befindliche Material des Grundkörpers 2 verdrängt. Aufgrund dieser Materialverdrängung wird die Dicke des Grundkörpers 2 über die Grund-Bahndicke, mit der der Grundkörper 2 im Bereitstellungsschritt 19 extrudiert wurde, vergrößert. Nach dem Einprägen der Rillen 7 und der Gegen-Rillen 8 weist der Grundkörper 2 die Bahndicke d, wie sie oben mit Bezug auf die Fig. 1 bis 3 beschrieben wurde, auf.

Die Mikroprofilierung 11 wird in einem Profilierschritt 26 erzeugt. In der Fertigungsvorrichtung 14 wird der Profilierschritt mithilfe von Profilier-Prägewalzen 27 durchgeführt. Hierzu weisen die Profilier-Prägewalzen 27 eine Oberflächenprofilierung 28 auf, die der Mikroprofilierung 11 entspricht. Die Mikroprofilierung 11 der zweiten Oberfläche 6 wird mithilfe der Profilier-Prägewalze 27, die Teil des ersten Glättwerks 17 ist, erzeugt. Die Mikroprofilierung 11 der ersten Oberfläche 5 wird mithilfe der Profilier-Prägewalze 27, die Teil des zweiten Glättwerks 18 ist, erzeugt.

Der Rillen-Einformschritt 20, der Gegen-Rillen-Einformschritt 23 sowie der Pofilierschritt 26 werden durchgeführt, solange der den Grundkörper 2 bildende Werkstoff noch warm und entsprechend formbar ist. Die weiteren Fertigungsschritte können auch nach Abkühlen des Werkstoffs durchgeführt werden.

Für den Fall, dass die Durchtrittsöffnungen 10 nicht allein aufgrund des Einprägens der Rillen 7 bzw. der Gegen-Rillen 8 in dem Rillen-Einformschritt 20 und dem Gegen-Rillen-Einformschritt 23 ausgebildet wurden, kann das Fertigungsverfahren 13 einen optionalen Perforierschritt 29 umfassen. In dem Perforierschritt 29 können dann im Bereich der Kreuzungsstellen 9 verbleibende Materialreste durchtrennt und/oder entfernt werden. Dies kann beispielsweise mechanisch mittels Durchlochen bzw. Durchstechen oder pneumatisch mit Druckluft erfolgen. Alternativ können die Durchtrittsöffnungen 10 auch hydraulisch mittels Wasserstrahlen eingebracht werden. Eine entsprechend ausgelegte Perforiervorrichtung 30 schließt sich in der Fertigungsvorrichtung 14 in Maschinenrichtung 16 an die Glättwerke 17, 18 an.

In einem Kerbschritt 31 wird die erste Oberfläche 5 des Grundkörpers 2 gekerbt. Die Kerben 12 werden mithilfe der Kerbvorrichtung 32 eingebracht. Alternativ zu dem Vorsehen einer extra Kerbvorrichtung 32 können entsprechende Kerb-Werkzeuge auch an den Profilier-Prägewalzen 27 vorgesehen sein.

An die zuvor genannten Fertigungsschritte schließt sich ein optionaler Ergänzungsschritt 33 an. In dem Ergänzungsschritt 33 können Abdeckschichten, beispielsweise in Form von PP-Vliesstoffen, auf die Oberflächen 5, 6 des Grundkörpers 2 aufgebracht werden. Eine für den Ergänzungsschritt 33 verwendbare Kaschiervorrichtung ist bei der Fertigungsvorrichtung 14 der Übersichtlichkeit halber nicht gezeigt.

Neben der Fertigungsvorrichtung 14 können auch weitere Fertigungsvorrichtungen für die Durchführung des Fertigungsverfahrens 13 verwendet werden. In weiteren nicht dargestellten Ausführungsbeispielen einer Fertigungsvorrichtung für die Kunststoffdränbahn 1 können die Prägewalzen unterschiedlich angeordnet sein. Beispielsweise ist es möglich, die Rillen-Prägewalze und die Gegen-Rillen-Prägewalze in einem ersten Glättwerk zu kombinieren. Die beiden Profilier-Prägewalzen können dann in einem zweiten, nachgeschalteten Glättwerk übereinander positioniert sein. In wiederum anderen, nicht dargestellten Ausführungsbeispielen weisen die Rillen-Prägewalze sowie die Gegen-Rillen-Prägewalze jeweils eine Oberflächenprofilierung zwischen den jeweiligen (Gegen-) Rillen-Werkzeugen auf. Diese Rillen-Prägewalze und die Gegen-Rillen-Prägewalze sind in diesem Fall in einem einzigen Glättwerk kombiniert, welches das Einprägen der Rillen 7, der Gegen-Rillen 8 sowie der Mikroprofilierung 11 gewährleistet. Entsprechend ist ein zweites Glättwerk nicht nötig.

In Fig. 6 ist ein weiteres Ausführungsbeispiel einer Fertigungsvorrichtung 14a zur Fertigung der Kunststoffdränbahn 1 gezeigt. Komponenten, die im Zusammenhang mit der Fertigungsvorrichtung 14 gemäß Fig. 5 bereits beschrieben worden sind, tragen die gleichen Bezugszeichen. Konstruktiv unterschiedliche, jedoch funktional gleichartige Teile erhalten dieselben Bezugszeichen mit einem nachgestellten a.

In der Darstellung der Fertigungsvorrichtung 14a zeigt die erste Oberfläche 5 der zu fertigenden Kunststoffdränbahn 1 nach oben, wohingegen die zweite Oberfläche 6 nach unten weist. Die Fertigungsvorrichtung 14a weist einen Breitschlitzextruder 15a auf. Der Breitschlitzextruder 15a weist einen Extruderschlitz 34 mit Vorsprüngen 35 auf. Die Form der einzelnen Vorsprünge 35 entspricht dem Querschnitt Q der Rillen 7 in der ersten Oberfläche 5. Beim Extrudieren des Grundkörpers 2 mithilfe des Breitschlitzextruders 15a werden die Rillen 7 in die erste Oberfläche 5 des Grundkörpers 2 eingeformt. In diesem Sinne erfolgt der Rillen-Einformschritt 20 zeitgleich mit dem Bereitstellungsschritt 19. Ein nachträgliches Einprägen der Rillen 7 in den Grundkörper 2 ist nicht notwendig. Dementsprechend weist die Fertigungsvorrichtung 14a kein erstes Glättwerk 17 auf.

Das einzige Glättwerk 18a der Fertigungsvorrichtung 14a weist eine Profilier-Prägewalze 27 und eine Gegen-Rillen-Prägewalze 24a auf. Mithilfe der Profilier-Prägewalze 27 wird die Mikroprofilierung 11 auf der ersten Oberfläche 5 in Bereichen zwischen den Rillen 7 erzeugt. Die Gegen-Rillen-Prägewalze 24a weist die Gegen-Rillen-Werkzeuge 25 auf, mit denen die Gegen-Rillen 8 in die zweite Oberfläche 6 des Grundkörpers 2 eingeprägt werden. Zwischen den Gegen-Rillen-Werkzeugen 25 weist die Gegen-Rillen-Prägewalze 24a eine Oberflächenprofilierung 28 auf, mit deren Hilfe die Mikroprofilierung 11 auf der zweiten Oberfläche 6 in Bereichen zwischen den Gegen-Rillen 8 erzeugt wird.

Weitere Komponenten der Fertigungsvorrichtung 14a, wie beispielsweise eine Perforiervorrichtung oder eine Kerbvorrichtung, gleichen den entsprechenden Komponenten der Fertigungsvorrichtung 14. Diese Komponenten und eine gegebenenfalls vorgesehenen Kaschiervorrichtung sind in der Fig. 6 der Übersichtlichkeit halber nicht gezeigt.

Das hier beschriebene Fertigungsverfahren 13 ermöglicht die Fertigung der Kunststoffdränbahn 1 in definierter und gleichmäßiger Qualität. Zudem können die Eigenschaften der Kunststoffdränbahn 1 flexibel an die jeweiligen Anforderungen angepasst werden. Beispielsweise können die verwendeten Materialien variiert werden. Ebenso sind der Querschnitt Q, die Tiefen d₁, d₂ und die Abstände B₂, L₂ der Rillen 7 beziehungsweise der Gegen-Rillen 8 frei wählbar.

Bei dem oben beschriebenen Fertigungsverfahren 13 entspricht die Breite B der Kunststoffdränbahn 1 im Wesentlichen der Breite, mit welcher der Grundkörper 2 extrudiert wird. In weiteren Ausführungsformen des Verfahrens ist es jedoch auch möglich, die Breite B der Kunststoffdränbahn 1 gezielt zu verändern. In einem Ausführungsbeispiel des Fertigungsverfahrens kann der extrudierte Grundkörper 2 an dessen in Längsrichtung 3 verlaufenden Längskanten gegriffen und in Querrichtung 4 in die Breite gezogen werden. Hierdurch kann die Breite B des Grundkörpers 2 und damit der Kunststoffdränbahn 1 vergrößert werden. Die Kunststoffdränbahn 1 kann insbesondere eine Breite B aufweisen, die die Breite des zur Extrusion des Grundkörpers 2 verwendeten Breitschlitzextruders übersteigt.

In einem weiteren Ausführungsbeispiel des Fertigungsverfahrens wird die Kunststoffdränbahn 1 in Maschinenrichtung 16, d. h. entlang der Längsrichtung 3, verstreckt. Dies kann beispielsweise geschehen, indem ein dem Extruder nachgeschaltetes Glättwerk eine bezogen auf die Fördergeschwindigkeit des Grundkörpers erhöhte Abzugsgeschwindigkeit aufweist. Die Abzugsgeschwindigkeit bestimmt sich durch die Geschwindigkeit, mit der sich die Oberfläche bzw. die Prägewerkzeuge der Prägewalzen des Glättwerks entlang des Umfangs der Prägewalze bewegen. Die Fördergeschwindigkeit entspricht der Extrusionsgeschwindigkeit, mit der der Grundkörper 2 extrudiert wird. Die erhöhte Abzugsgeschwindigkeit führt zu einem Verstrecken der Kunststoffdränbahn 1 in Maschinenrichtung 16. Hierdurch wird die Breite B der Kunststoffdränbahn 1 zugunsten deren Länge verringert.

Weitere Ausführungsbeispiele für Fertigungsverfahren zur Fertigung der Kunststoffdränbahn 1 unterscheiden sich in der Methode, mit welcher die Gegen-Rillen 8 in die zweite Oberfläche 6 eingebracht werden. In einem Ausführungsbeispiel werden zunächst die Rillen 7 mit einer Tiefe d₁ in die erste Oberfläche 5 eingeprägt. Hieraufhin wird die zweite Oberfläche 6 gekerbt. Die Kerbung verläuft bevorzugt in Querrichtung 4. Die Kerbung weist eine Tiefe d₂ auf, die mindestens der Differenz zwischen der Bahndicke d und der Tiefe d₁ der Rillen 7 entspricht: d₂ ≥ d - d₁. Nach dem Einbringen der Kerben wird der Grundkörper 2 in Maschinenrichtung 16, d. h. in Längsrichtung 3, verstreckt. Das Verstrecken erfolgt wiederum durch eine erhöhte Abzugsgeschwindigkeit eines nachgeschalteten Glättwerks. Durch das Verstrecken werden die Kerben geöffnet und bilden die Gegen-Rillen 8 aus. Gleichzeitig werden die Durchlassöffnungen 10 zwischen den Rillen 7 und den Gegen-Rillen 8 geöffnet.

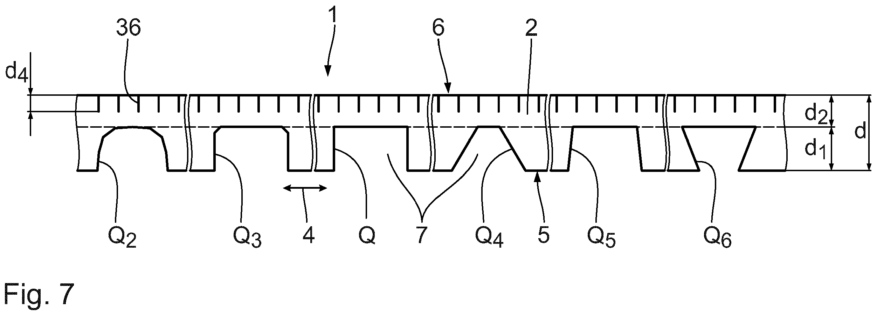

In Fig. 7 sind alternative Querschnittsformen für die Rillen 7 gezeigt. Neben den oben bereits diskutierten Rillen 7 mit rechteckigem Querschnitt Q können auch Rillen mit rechteckigem Querschnitt Q₃ mit Eckaussteifung, Voute genannt, vorgesehen sein. Weitere mögliche Querschnitte weisen eine Tunnelform (Q₂), eine flache Trapezform (Q₄), eine steile Trapezform (Q₅) oder eine hinterschnittene Trapezform (Q₆) auf. Entsprechende Querschnittsformen können selbstverständlich auch für die Gegen-Rillen 8 vorgesehen sein.

Wie aus Fig. 7 weiterhin ersichtlich ist, können auch auf der zweiten Oberfläche 6 Kerben 36 vorgesehen sein, die in Längsrichtung 3 verlaufen. Die Tiefe d₄ der Kerben 36 ist kleiner als die Bahndicke d abzüglich der Tiefe d₁ der Rillen 7: d - d₁ > d₄.

In anderen, nicht dargestellten Ausführungsbeispielen weisen die Rillen 7 und die Gegen-Rillen 8 eine veränderte Anordnung auf. Beispielsweise können die Gegen-Rillen 8 nicht senkrecht zu der Längsrichtung 3, also in Querrichtung 4, sondern schräg hierzu verlaufen. Im Allgemeinen können die Rillen 7 und die Gegen-Rillen 8 einen Winkel zwischen 20° und 160° einschließen.

In weiteren Ausführungsbeispielen entspricht die Summe der Tiefe d₁ der Rillen 7 und der Tiefe d₂ der Gegen-Rillen 8 nicht gleich der Bahndicke d. Im Allgemeinen können die Tiefen d₁, d₂ jeweils zwischen 10 % und 90 % der Bahndicke d betragen. Für den Fall, dass die Summe aus den Tiefen d₁ und d₂ kleiner als die Bahndicke d ist, müssen die Durchtrittsöffnungen 10 im Bereich der Kreuzungsstellen 9 zwingend mithilfe des Perforierschritts 29 eingebracht werden, beispielsweise indem verbleibendes Material mithilfe eines Dorns durchstochen wird.

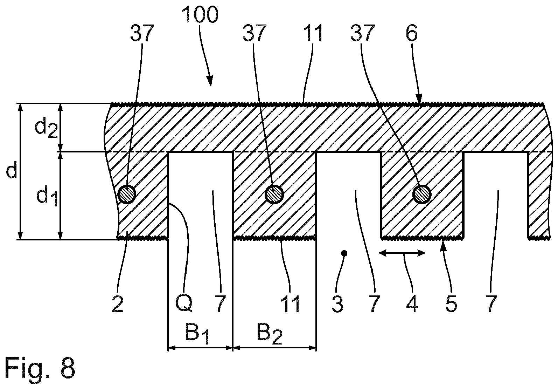

In Fig. 8 ist ein Querschnitt durch ein weiteres Ausführungsbeispiel einer Kunststoffdränbahn 100 gezeigt. Komponenten, die in Zusammenhang mit der Kunststoffdränbahn 1 gemäß den Fig. 1 bis 7 bereits erläutert worden sind, tragen die gleichen Bezugszeichen.

Die Kunststoffdränbahn 100 unterscheidet sich von der Kunststoffdränbahn 1 dadurch, dass in deren Grundkörper 2 zwischen den in Längsrichtung 3 verlaufenden Rillen 7 Bewehrungsstrukturen 37 eingebettet sind. Die Bewehrungsstrukturen 37 sind vollumfänglich in den Grundkörper 2 der Kunststoffdränbahn 100 eingebettet. Die Bewehrungsstrukturen 37 erstrecken sich in Längsrichtung 3 über die gesamte Länge der Kunststoffdränbahn 100. Hierdurch ist eine einaxiale Bewehrung der Kunststoffdränbahn 100 realisiert. Die Kunststoffdränbahn 100 kann erhebliche Kräfte in Längsrichtung 3 aufnehmen. Hierdurch sind Funktionalität und Einsatzmöglichkeiten der Kunststoffdränbahn 100 erhöht. Die Kunststoffdränbahn 100 kann als Bewehrung eingesetzt werden, ohne dass hierzu zusätzliche externe Bewehrungselemente, wie beispielsweise Geogitter, nötig sind.

Die Bewehrungsstrukturen 37 umfassen Kunststoffgarne in Form von Multifilamentgarnen bestehend aus Polyethylenterephthalat (PET) und/oder Polyvinylalkohol (PVAL). In anderen Ausführungsbeispielen umfassen die Bewehrungsstrukturen 37 Garne aus Glasfasern, Basaltfasern und/oder Stahlfasern.

In weiteren Ausführungsbeispielen der Kunststoffdränbahn 100 sind zwischen jeweils zwei Längsrillen 7 mehrere Bewehrungsstrukturen 37 eingebettet.

Die Bewehrungsstrukturen 37 der Kunststoffdränbahn 100 können bei den oben beschriebenen Fertigungsverfahren in den Grundkörper 2 eingebracht werden. Hierzu werden Endlosgarne aus dem die Bewehrungsstruktur 37 bildenden Material bereitgestellt und beim Extrudieren des Grundkörpers 2 im Bereitstellungsschritt 19 in die Formmasse des Grundkörpers 2 eingeführt und eingebettet.

## Patentansprüche

1. Verfahren zur Fertigung einer Kunststoffdränbahn mit den Schritten:
- Bereitstellen eines bahnförmigen Grundkörpers (2) mit einer ersten Oberfläche (5) und einer von der ersten Oberfläche (5) um eine Grund-Bahndicke des Grundkörpers (2) beabstandeten zweiten Oberfläche (6),
- Einbringen von Rillen (7) in die erste Oberfläche (5) des Grundkörpers (2),
- Einbringen von Gegen-Rillen (8) in die zweite Oberfläche (6) des Grundkörpers (2), wobei sich die Gegen-Rillen (8) und die Rillen (7) an Kreuzungsstellen (9) kreuzen, und
- Ausbilden von Durchtrittsöffnungen (10) zwischen den Rillen (7) und den Gegen-Rillen (8) im Bereich der Kreuzungsstellen (9) zur Fertigstellung der Kunststoffdränbahn (1; 100),
**dadurch gekennzeichnet, dass** auf mindestens einer der Oberflächen (5, 6) des Grundkörpers (2) in Bereichen zwischen den Rillen (7) beziehungsweise den Gegen-Rillen (8) eine Oberflächenprofilierung (11) erzeugt wird.

2. Verfahren nach Anspruch 1, **dadurch gekennzeichnet, dass** der Grundkörper (2) extrudiert wird, insbesondere mit einem Breitschlitzextruder (15; 15a).

3. Verfahren nach einem der vorgenannten Ansprüche, **dadurch gekennzeichnet, dass** der Grundkörper (2) mindestens eines der folgenden Materialien umfasst: Polyethylen (PE), Polypropylen (PP), Polyamid (PA), Polystyrol (PS), Acrylnitril-Butadien-Styrol-Copolymer (ABS), Holz-Kunststoff- Verbundwerkstoff (WPC), Biopolymere, Polyvinylchlorid (PVC) und Polyethylenterephthalat (PET).

4. Verfahren nach einem der vorgenannten Ansprüche, **dadurch gekennzeichnet, dass** die Rillen (7) derart in die erste Oberfläche (5) des Grundkörpers (2) eingebracht, insbesondere eingeformt werden, dass diese in einer Längsrichtung (3) des Grundkörpers (2) oder senkrecht hierzu verlaufen.

5. Verfahren nach einem der vorgenannten Ansprüche, **dadurch gekennzeichnet, dass** die Rillen (7) in Richtung senkrecht zu der ersten Oberfläche (5) mit einer Tiefe d₁ eingebracht werden und die Gegen-Rillen (8) in Richtung senkrecht zu der zweiten Oberfläche (6) mit einer Tiefe d₂ eingebracht werden, wobei die Summe aus d₁ und d₂ größer oder gleich einer Bahndicke (d) des Grundkörpers (2) ist.

6. Verfahren nach einem der vorgenannten Ansprüche, **dadurch gekennzeichnet, dass** mindestens eine der Oberflächen (5, 6) des Grundkörpers (2) gekerbt wird.

7. Verfahren nach einem der vorgenannten Ansprüche, **dadurch gekennzeichnet, dass** die Rillen (7) und/oder Gegen-Rillen (8) mit einer gemittelten Rautiefe nach DIN 4768 Teil 1 zwischen 0,2 µm und 0,7 µm eingeformt werden.

8. Kunststoffdränbahn umfassend
- einen bahnförmigen Grundkörper (2) mit einer ersten Oberfläche (5) und einer von der ersten Oberfläche (5) um eine Bahndicke (d) des Grundkörpers (2) beabstandeten zweiten Oberfläche (6),
- in die erste Oberfläche (5) des Grundkörpers (2) eingebrachte Rillen (7),
- in die zweite Oberfläche (6) des Grundkörpers (2) eingebrachte Gegen-Rillen (8), wobei sich die Gegen-Rillen (8) und die Rillen (7) an Kreuzungsstellen (9) kreuzen, und
- Durchtrittsöffnungen (10) zwischen den Rillen (7) und den Gegen-Rillen (8) im Bereich der Kreuzungsstellen (9),
**gekennzeichnet durch** eine Oberflächenprofilierung (11) auf mindestens einer der Oberflächen (5, 6) des Grundkörpers (2) im Bereich zwischen den Rillen (7) beziehungsweise zwischen den Gegen-Rillen (8).

9. Kunststoffdränbahn nach Anspruch 8, **dadurch gekennzeichnet, dass** der Grundkörper (2) eine Breite (B) zwischen
2 m und 8 m hat.

10. Kunststoffdränbahn nach einem der Ansprüche 8 oder 9, **gekennzeichnet durch** eine gemittelte Rautiefe nach DIN 4768 Teil 1 zwischen 0,2 µm und 0,7 µm zumindest im Bereich der Rillen (7) und/oder Gegen-Rillen (8).

11. Kunststoffdränbahn nach einem der Ansprüche 8 bis 10, **gekennzeichnet durch** ein Flächengewicht zwischen 1.500 g/m² und 18.000 g/m².

12. Kunststoffdränbahn nach einem der Ansprüche 8 bis 11, **dadurch gekennzeichnet, dass** der Grundkörper (2) mindestens eines der folgenden Materialien umfasst: Polyethylen (PE), Polypropylen (PP), Polyamid (PA), Polystyrol (PS), Acrylnitril-Butadien-Styrol-Copolymer (ABS), Holz-Kunststoff- Verbundwerkstoff (WPC), Biopolymere, Polyvinylchlorid (PVC) und Polyethylenterephthalat (PET).

13. Kunststoffdränbahn nach einem der Ansprüche 8 bis 12, **gekennzeichnet durch** mindestens eine in den Grundkörper (2) eingebettete Bewehrungsstruktur (37).

## Claims

1. Method for manufacturing a plastic drain sheet, having the steps of:
- providing a sheet-like main body (2) having a first surface (5) and a second surface (6), spaced from the first surface (5) by a basic sheet thickness of the main body (2),
- introducing grooves (7) into the first surface (5) of the main body (2),
- introducing mating grooves (8) into the second surface (6) of the main body (2), wherein the mating grooves (8) and the grooves (7) cross one another at crossing points (9), and
- forming through-openings (10) between the grooves (7) and the mating grooves (8) in the region of the crossing points (9) to complete the plastic drain sheet (1; 100),
**characterized in that** a surface profiling (11) is created on at least one of the surfaces (5, 6) of the main body (2) in regions between the grooves (7) or the mating grooves (8), respectively.

2. Method as claimed in claim 1, **characterized in that** the main body (2) is extruded, in particular by means of a slit die extruder (15; 15a).

3. Method as claimed in either of the preceding claims, **characterized in that** the main body (2) comprises at least one of the following materials: polyethylene (PE), polypropylene (PP), polyamide (PA), polystyrene (PS), acrylonitrile butadiene styrene copolymer (ABS), woodplastic composite material (WPC), biopolymers, polyvinyl chloride (PVC) and polyethylene terephthalate (PET).

4. Method as claimed in one of the preceding claims, **characterized in that** the grooves (7) are introduced, in particular formed, into the first surface (5) of the main body (2) in such a way that said grooves run in a longitudinal direction (3) of the main body (2) or perpendicular thereto.

5. Method as claimed in one of the preceding claims, **characterized in that** the grooves (7) are introduced in the direction perpendicular to the first surface (5) with a depth d₁ and the mating grooves (8) are introduced in the direction perpendicular to the second surface (6) with a depth d₂, wherein the sum of d₁ and d₂ is greater than or equal to a sheet thickness (d) of the main body (2).

6. Method as claimed in one of the preceding claims, **characterized in that** at least one of the surfaces (5, 6) of the main body (2) is notched.

7. Method as claimed in one of the preceding claims, **characterized in that** the grooves (7) and/or mating grooves (8) are formed in with a mean surface roughness in accordance with DIN 4768 part 1 of between 0.2 µm and 0.7 µm.

8. Plastic drain sheet, comprising
- a sheet-like main body (2) having a first surface (5) and a second surface (6), spaced apart from the first surface (5) by a sheet thickness (d) of the main body (2),
- grooves (7) introduced into the first surface (5) of the main body (2),
- mating grooves (8) introduced into the second surface (6) of the main body (2), wherein the mating grooves (8) and the grooves (7) cross one another at crossing points (9), and
- through-openings (10) between the grooves (7) and the mating grooves (8) in the region of the crossing points (9),
**characterized by** a surface profiling (11) on at least one of the surfaces (5, 6) of the main body (2) in the region between the grooves (7) or between the mating grooves (8).

9. Plastic drain sheet as claimed in claim 8, **characterized in that** the main body (2) has a width (B) of between 2 m and 8 m.

10. Plastic drain sheet as claimed in one of claims 8 or 9, **characterized by** a mean surface roughness in accordance with DIN 4768, Part 1 of between 0.2 µm and 0.7 µm, at least in the region of the grooves (7) and/or the mating grooves (8).

11. Plastic drain sheet as claimed in one of claims 8 to 10, **characterized by** a weight per unit area of between 1,500 g/m² and 18,000 g/m².

12. Plastic drain sheet as claimed in one of claims 8 to 11, **characterized in that** the main body (2) comprises at least one of the following materials: polyethylene (PE), polypropylene (PP), polyamide (PA), polystyrene (PS), acrylonitrile butadiene styrene copolymer (ABS), woodplastic composite material (WPC), biopolymers, polyvinyl chloride (PVC) and polyethylene terephthalate (PET).

13. Plastic drain sheet as claimed in one of claims 8 to 12, **characterized by** at least one reinforcing structure (37) embedded into the main body (2).

## Revendications

1. Procédé de fabrication d'une bande de drainage en matière plastique comprenant les étapes suivantes :
- mise à disposition d'un corps de base (2) en forme de bande avec une première surface (5) et une deuxième surface (6) espacée de la première surface (5) d'une épaisseur de bande de base du corps de base (2),
- réalisation de rainures (7) dans la première surface (5) du corps de base (2),
- introduction de contre-rainures (8) dans la deuxième surface (6) du corps de base (2), les contre-rainures (8) et les rainures (7) se croisant en des points de croisement (9), et
- formation d'ouvertures de passage (10) entre les rainures (7) et les contre-rainures (8) dans la zone des points de croisement (9) pour achever la bande de drainage en matière plastique (1 ; 100),
**caractérisé en ce qu'**un profilage de surface (11) est produit sur au moins l'une des surfaces (5, 6) du corps de base (2) dans des zones situées entre les rainures (7) ou les contre-rainures (8).

2. Procédé selon la revendication 1, **caractérisé en ce que** le corps de base (2) est extrudé, en particulier avec une extrudeuse à fente large (15 ; 15a).

3. Procédé selon l'une quelconque des revendications précédentes, **caractérisé en ce que** le corps de base (2) comprend au moins l'un des matériaux suivants : polyéthylène (PE), polypropylène (PP), polyamide (PA), polystyrène (PS), copolymère acrylonitrile-butadiène-styrène (ABS), composite bois-plastique (WPC), biopolymères, polychlorure de vinyle (PVC) et polyéthylène téréphtalate (PET).

4. Procédé selon l'une quelconque des revendications précédentes, **caractérisé en ce que** les rainures (7) sont réalisées, en particulier formées, dans la première surface (5) du corps de base (2) de telle sorte qu'elles s'étendent dans une direction longitudinale (3) du corps de base (2) ou perpendiculairement à celle-ci.

5. Procédé selon l'une quelconque des revendications précédentes, **caractérisé en ce que** les rainures (7) sont réalisées dans une direction perpendiculaire à la première surface (5) avec une profondeur d₁ et les contre-rainures (8) sont réalisées dans une direction perpendiculaire à la deuxième surface (6) avec une profondeur d₂, la somme de d₁ et d₂ étant supérieure ou égale à une épaisseur de bande (d) du corps de base (2).

6. Procédé selon l'une quelconque des revendications précédentes, **caractérisé en ce qu'**au moins l'une des surfaces (5, 6) du corps de base (2) est entaillée.

7. Procédé selon l'une quelconque des revendications précédentes, **caractérisé en ce que** les rainures (7) et/ou les contre-rainures (8) sont formées avec une profondeur de rugosité moyenne selon DIN 4768 partie 1 comprise entre 0,2 µm et 0,7 µm.

8. Bande de drainage en matière plastique comprenant
- un corps de base (2) en forme de bande avec une première surface (5) et une deuxième surface (6) espacée de la première surface (5) d'une épaisseur de bande (d) du corps de base (2),
- des rainures (7) réalisées dans la première surface (5) du corps de base (2),
- des contre-rainures (8) réalisées dans la deuxième surface (6) du corps de base (2), les contre-rainures (8) et les rainures (7) se croisant en des points de croisement (9), et
- des ouvertures de passage (10) entre les rainures (7) et les contre-rainures (8) dans la zone des points de croisement (9),
**caractérisée par** un profilage de surface (11) sur au moins une des surfaces (5, 6) du corps de base (2) dans la zone entre les rainures (7) ou entre les contre-rainures (8).

9. Bande de drainage en matière plastique selon la revendication 8, **caractérisée en ce que** le corps de base (2) a une largeur (B) comprise entre 2 m et 8 m.

10. Bande de drainage en matière plastique selon l'une quelconque des revendications 8 ou 9, **caractérisée par** une profondeur de rugosité moyenne selon DIN 4768 partie 1 comprise entre 0,2 µm et 0,7 µm au moins dans la zone des rainures (7) et/ou des contre-rainures (8).

11. Bande de drainage en matière plastique selon l'une quelconque des revendications 8 à 10, **caractérisée par** un grammage compris entre 1 500 g/m² et 18 000 g/m².

12. Bande de drainage en matière plastique selon l'une quelconque des revendications 8 à 11, **caractérisée en ce que** le corps de base (2) comprend au moins l'un des matériaux suivants : polyéthylène (PE), polypropylène (PP), polyamide (PA), polystyrène (PS), copolymère acrylonitrile-butadiène-styrène (ABS), composite bois-plastique (WPC), biopolymères, polychlorure de vinyle (PVC) et polyéthylène téréphtalate (PET).

13. Bande de drainage en matière plastique selon l'une quelconque des revendications 8 à 12, **caractérisée par** au moins une structure d'armature (37) noyée dans le corps de base (2).
